# EUROPEAN PATENT APPLICATION

(11) **EP 4 835 998 A1**
(43) Date of publication of application: **04.11.2026**
(21) Application number: 24912614.5
(22) Date of filing: 19.12.2024
(51) Int. Cl.: H01M 4/38, H01M 4/36

(54) **NEGATIVE ELECTRODE MATERIAL POWDER FOR LITHIUM ION BATTERY**

(30) Priority: 26.12.2023 JP 2023219678
(71) Applicant: Daido Steel Co., Ltd., Nagoya-shi Aichi 461-8581 (JP)
(72) Inventor: HAMADA, Yuki, Nagoya-shi, Aichi 457-8545 (JP); KIMURA, Yuta, Nagoya-shi, Aichi 457-8545 (JP); TANAKA, Yuki, Nagoya-shi, Aichi 457-8545 (JP); ONO, Kotaro, Kyoto-shi, Kyoto 600-8813 (JP); SHOJO, Daisaku, Kyoto-shi, Kyoto 600-8813 (JP); FUKUI, Toshimi, Kyoto-shi, Kyoto 600-8813 (JP)
(74) Representative: Diehl & Partner
(86) International application number: PCT/JP2024/044979
(87) International publication number: WO 2025/142725

(57) **Abstract**

The present invention relates to a negative electrode material powder for a lithium ion battery, which contains a Si-containing granulated body that contains a Si-based powder and a carbon material, wherein: the average primary particle diameter of the Si-based powder is 0.1 µm or more; the average secondary particle diameter of the Si-containing granulated body is 2 µm or more; the surface of the Si-based powder is covered with the carbon material and the Si-based powder is bonded with the carbon material; and the value represented by the formula (58.1 × average primary particle diameter (µm) + 5.6 × carbon amount (mass%)) of the Si-based powder is more than 15.

## Description

### TECHNICAL FIELD

This invention relates to a negative electrode material powder for a lithium-ion battery.

### BACKGROUND ART

A lithium-ion battery has an advantage of being able to miniaturize with a high capacity and a high voltage, and has been widely used as a power supply for mobile phones and laptops. In recent years, it has attracted much expectations as a power supply for power applications such as electric vehicles and hybrid vehicles, and the development thereof has been actively promoted.

In the lithium-ion battery, lithium ions (hereinafter may be referred to as Li ions) move between a positive electrode and a negative electrode for charging and discharging. On a negative electrode side, Li ions are occluded in a negative electrode active material during charging, and Li ions are released from the negative electrode active material during discharging.

Among the above, graphite has been widely used as the negative electrode active material, but a theoretical capacity thereof is only 372 mAh/g, and a further higher capacity has been desired.

Therefore, as the negative electrode active material for the lithium-ion battery, Si that exhibits a capacity about 10 times that of graphite has been proposed.

However, Si has a problem in cycle characteristics when charging and discharging are repeated.

With respect to this, Patent Literature 1 discloses a negative electrode material for a battery in which a carbon material is formed around a silicon material with voids therebetween by using a thermal chemical vapor deposition (CVD) method. In addition, Patent Literature 2 discloses a negative electrode material for a lithium secondary battery including carbon on a part or all of a surface of silicon oxide particles. Further, Patent Literature 3 discloses a carbon material in which a silicon oxide is surrounded by carbon material particles.

### CITATION LIST

### PATENT LITERATURE

Patent Literature 1: JP6978947B
Patent Literature 2: JP6615431B
Patent Literature 3: JP5516529B

### SUMMARY OF INVENTION

### TECHNICAL PROBLEM

In any case of Patent Literatures 1 to 3, in obtaining a desired negative electrode material or carbon material, the surface of the silicon oxide represented by SiOx as an active material is coated with carbon in the production process.

However, according to the study of the present inventors, it has been found that in any case of Patent Literatures 1 to 3, a Si-based powder is likely to ignite at a relatively low temperature, and further, reacts with moisture to easily generate hydrogen (H₂).

Therefore, an object of the present invention is to provide a negative electrode material powder for a lithium-ion battery that is less likely to ignite, that has excellent safety, and that has good water resistance.

### SOLUTION TO PROBLEM

As a result of intensive studies on the above problems, the present inventors have found that by coating a Si-based powder itself, which is a primary particle containing a Si phase and a SiX compound phase, with a carbon material, adjusting an average primary particle diameter and a degree of coating, and satisfying a specific parameter, it is possible to realize good water resistance with a small hydrogen generation amount by a reaction with moisture while being less likely to ignite and realizing good safety, and have completed the present invention.

As a result of further studies, it has been found that the above parameter is also involved in cycle characteristics.

That is, the gist of the present invention is as follows.
[1] A negative electrode material powder for a lithium-ion battery, the negative electrode material powder containing:
   a Si-containing granulated body, in which
   the Si-containing granulated body contains a Si-based powder and a carbon material,
   the Si-based powder is primary particles containing a Si phase and a SiX compound phase,
   the SiX compound phase contains Si and an element X,
   the element X is at least one selected from the group consisting of Fe, Co, Cr, Mn, Ni, Zr, Ti, B, and P,
   the Si-based powder has an average primary particle diameter of 0.1 µm or more,
   the Si-containing granulated body has an average secondary particle diameter of 2 µm or more,
   the Si-based powder has a surface coated with the carbon material, and the Si-based powders are bonded to each other with the carbon material, and
   the Si-based powder has a carbon coating parameter A represented by the following formula of more than 15, 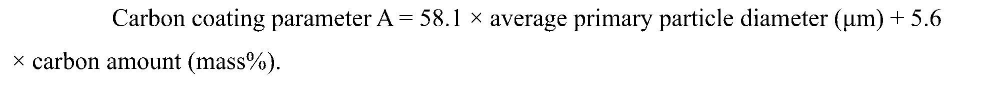 Carbon coating parameter A = 58.1 × average primary particle diameter (µm) + 5.6 × carbon amount (mass%).
[2] The negative electrode material powder for a lithium-ion battery according to the above [1], in which the Si-containing granulated body has a content proportion of SiC of less than 15%.
[3] The negative electrode material powder for a lithium-ion battery according to the above [1] or [2], in which the carbon coating parameter A is more than 48.
[4] The negative electrode material powder for a lithium-ion battery according to any one of the above [1] to [3], in which the average primary particle diameter of the Si-based powder is 5.0 µm or less.
[5] The negative electrode material powder for a lithium-ion battery according to any one of the above [1] to [4], in which the average secondary particle diameter of the Si-containing granulated body is 20 µm or less.
[6] The negative electrode material powder for a lithium-ion battery according to any one of the above [1] to [5], in which the Si-containing granulated body has an aspect ratio of 1.0 to 1.8.
[7] The negative electrode material powder for a lithium-ion battery according to any one of the above [1] to [6], in which
   the Si-based powder is primary particles further containing at least one selected from the group consisting of a SnCu compound phase and an AlCu compound phase,
   the SnCu compound phase contains Sn and Cu,
   the AlCu compound phase contains Al and Cu, and
   the Si-based powder has a content proportion of the Si phase of 30 mass% or more.
[8] The negative electrode material powder for a lithium-ion battery according to the above [7], in which the Si-based powder has a total content proportion of the SnCu compound phase and the AlCu compound phase of 0.1 mass% to 15 mass%.

### ADVANTAGEOUS EFFECTS OF INVENTION

According to the present invention, it is possible to provide a negative electrode material powder for a lithium-ion battery that is less likely to ignite, that has excellent safety, and that has good water resistance. Therefore, when the negative electrode material powder is used as a negative electrode active material in a lithium-ion battery, safety of the lithium-ion battery itself can also be improved. In addition, deterioration of the lithium-ion battery due to moisture can be prevented.

Further, in the present invention, various battery characteristics such as cycle characteristics can be improved by optimizing conditions.

### DESCRIPTION OF EMBODIMENTS

Hereinafter, embodiments of the present invention are described. Note that, the present invention is not limited to the embodiments described below. In addition, in the present description, "to" indicating a numerical range is used to mean that numerical values written before and after it are included as a lower limit value and an upper limit value. Further, in the present description, mass% and wt% are synonymous.

### <<Negative Electrode Material Powder for Lithium-Ion Battery>>

A negative electrode material powder for a lithium-ion battery according to the present embodiment contains a Si-containing granulated body.

The Si-containing granulated body is a granulated body having an average secondary particle diameter of 2 µm or more, and contains a Si-based powder and a carbon material.

The Si-based powder is primary particles having an average primary particle diameter of 0.1 µm or more, and contains a Si phase and a SiX compound phase. A surface of the Si-based powder is coated with the carbon material, and a degree of coating can be represented by a specific carbon coating parameter A. In addition, the Si-based powders as primary particles are bonded to each other with the carbon material, and the Si-containing granulated body as secondary particles is formed.

### <Si-based Powder>

The Si-based powder contained in the Si-containing granulated body in the present embodiment is primary particles, and the surface thereof is coated with the carbon material.

The coating with the carbon material can be represented by a carbon coating parameter A represented by the following formula. 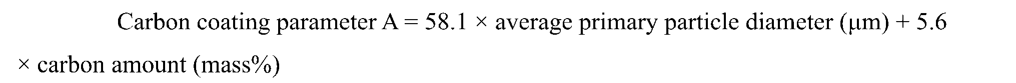 Carbon coating parameter A = 58.1 × average primary particle diameter (µm) + 5.6 × carbon amount (mass%)

The carbon coating parameter A has the average primary particle diameter of the Si-based powder and the carbon amount as variables, and 58.1, which is a coefficient of the average primary particle diameter, and 5.6, which is a coefficient of the carbon amount, are values derived from experimental results.

It has been found that when the value of the carbon coating parameter A is more than 15, the Si-containing granulated body is less likely to ignite and good water resistance can be realized.

The reason for this is not clear, but it is considered that when the value of the carbon coating parameter A is more than 15, a probability that the Si-based powder comes into direct contact with a flame decreases, and as a result, it is less likely to ignite. Similarly, as for the water resistance, a probability that the Si-based powder comes into direct contact with water decreases, and as a result, generation of a hydrogen gas (H₂) can be suitably suppressed. In addition, phases other than the Si phase and the SiX compound phase are also prevented from oxidation caused by contact with water, and as a result, an unexpected reaction in a negative electrode can be prevented.

That is, from the above viewpoints, the value of the carbon coating parameter A is more than 15, preferably 25 or more, and more preferably 35 or more.

In addition to the above, it has been found that the carbon coating parameter A in the present embodiment is also involved in cycle characteristics when the negative electrode material powder according to the present embodiment is applied to a lithium-ion battery. Specifically, when the value of the carbon coating parameter A is more than 48, good cycle characteristics can be realized. It is considered that when the surface of the Si-based powder is coated with the carbon material such that the value of the carbon coating parameter A is more than 48, direct contact between the Si phase or the SiX compound phase and an electrolytic solution is suitably prevented, and generation and collapse of SEI due to charging and discharging can be suppressed.

From the viewpoint of the cycle characteristics, the value of the carbon coating parameter A is preferably more than 48, more preferably 55 or more, and still more preferably 65 or more.

On the other hand, the upper limit of the value of the carbon coating parameter A is not particularly limited. It is not preferable to add a large amount of the carbon material from the viewpoint of productivity, and the value is, for example, 200 or less, may be 150 or less, and is preferably 120 or less.

That is, the value of the carbon coating parameter A is, for example, preferably more than 15 and 200 or less, and more preferably more than 48 and 120 or less.

The carbon amount used for the carbon coating parameter A in the present embodiment is a content proportion (mass%) of carbon with respect to a total of the Si-based powder as primary particles, the carbon amount, and other optional components.

Specifically, the carbon amount in the Si-based powder in the present description is a carbon concentration (mass%) measured by analyzing the Si-containing granulated body using a combustion infrared absorption method.

Note that, the surface of the Si-based powder as primary particles being coated with the carbon material can be checked by observation using a transmission electron microscope (TEM). In addition, in the case where the Si-containing granulated body is ignited within 10 seconds by a method used in safety evaluation in Examples to be described later, that is, a small gas flame ignition test, it may be determined that the coating is not performed.

The Si-containing granulated body in the present embodiment exhibits various effects such as safety, water resistance, and cycle characteristics by being granulated into secondary particles by bonding Si-based powders, which are primary particles having surfaces coated with a carbon material, to each other with the carbon material.

A granulated body of primary particles in which the primary particles are bound to each other with the carbon material, but the carbon material only adheres to an extremely part of the surfaces thereof, and whose surfaces cannot be said to be coated, or a granulated body in which only the surfaces of the secondary particles granulated by binding the primary particles to each other by a binder or the like are coated with the carbon material does not exhibit effects equivalent to those described above.

The carbon amount in the Si-based powder is preferably 1.0 mass% to 30.0 mass%, more preferably 4.0 mass% to 20.0 mass%, and still more preferably 6.0 mass% to 15.0 mass%. Here, the carbon amount is preferably 1.0 mass% or more, more preferably 4.0 mass% or more, and still more preferably 6.0 mass% or more, from the viewpoint of suppressing exposure of the Si phase, the SiX compound phase, and the like constituting the Si-based powder and coating a wide region. In addition, the carbon amount is preferably 30.0 mass% or less, more preferably 20.0 mass% or less, and still more preferably 15.0 mass% or less, from the viewpoint of suppressing a decrease in Coulombic efficiency.

The average primary particle diameter of the Si-based powder in the present embodiment is 0.1 µm or more, preferably 0.1 µm to 1.0 µm, more preferably 0.2 µm to 0.8 µm, and still more preferably 0.3 µm to 0.7 µm. Here, the average primary particle diameter is 0.1 µm or more, preferably 0.2 µm or more, and more preferably 0.3 µm or more, from the viewpoint of being less likely to ignite and improving the safety, from the viewpoint of the water resistance, and from the viewpoint of reducing the amount of the binder required as a negative electrode material. In addition, the average primary particle diameter is preferably 1.0 µm or less, more preferably 0.8 µm or less, and still more preferably 0.7 µm or less, from the viewpoint of reducing an absolute amount of expansion when occluding Li and of realizing good cycle characteristics.

Note that, the average primary particle diameter of the Si-based powder in the present description is a median diameter (D50) obtained from a volume-based particle size distribution obtained by measuring a slurry of the Si-containing granulated body before granulation using a laser diffraction/scattering particle size distribution measuring device. Alternatively, the average primary particle diameter of the Si-based powder can also be obtained by image analysis of an SEM photograph of the Si-containing granulated body. The average primary particle diameter of the Si-based powder can be adjusted by a pulverizing method, conditions, and the like.

The Si phase constituting the Si-based powder in the present embodiment occludes and releases Li and serves as a negative electrode active material. The Si phase is generally contained as Si particles in the Si-based powder. It is preferable that 95 mass% or more of the Si particles are particles composed of the Si phase. The Si phase may be contained as a Si phase as SiO₂ in the case of other than Si particles.

A content proportion of the Si phase in the Si-based powder in the present embodiment is preferably 10 mass% or more and less than 100 mass%, and more preferably 30 mass% to 90 mass%. Here, the content proportion is preferably 10 mass% or more, more preferably 20 mass% or more, still more preferably 30 mass% or more, even more preferably 50 mass% or more, and most preferably 55 mass% or more, from the viewpoint of obtaining a good initial discharge capacity and initial Coulombic efficiency. Since the Si-based powder contains the SiX compound phase in addition to the Si phase, the content proportion of the Si phase is less than 100 mass%. The content proportion is preferably 90 mass% or less, more preferably 88 mass% or less, and still more preferably 86 mass% or less, from the viewpoint of suitably obtaining an effect of a phase other than the Si phase.

The primary particles in the present embodiment, which are the Si-based powder, contain a SiX compound phase in addition to the Si phase. The Si-based powder may further contain at least one selected from the group consisting of a SnCu compound phase and an AlCu compound phase.

Here, the SiX compound phase contains Si and an element X, and the element X is at least one selected from the group consisting of Fe, Co, Cr, Mn, Ni, Zr, Ti, B, and P.

On the other hand, the SnCu compound phase contains Sn and Cu, and the AlCu compound phase contains Al and Cu.

The SiX compound phase in the present embodiment has a poor Li occlusion property and has very little expansion due to a reaction with Li ions. Therefore, the SiX compound phase plays the role of a skeleton that maintains a structure of an electrode material. In addition, since the SiX compound phase has high conductivity, it is also effective for ensuring conductivity between the Si phase and a conductive substance.

The SiX compound phase is generally contained as SiX compound particles in the Si-based powder. The SiX compound particles are preferably particles in which 95 mass% or more thereof is composed of the SiX compound phase, and may be particles composed only of the SiX compound phase. The SiX compound phase may be contained in the Si-based powder as an OX compound in the case of other than the SiX compound particles.

X in the SiX compound phase in the present embodiment is at least one element selected from the group consisting of Fe, Co, Cr, Mn, Ni, Zr, Ti, B, and P. Among them, from the viewpoint of a low expansion property and high conductivity, X is preferably one or more elements selected from the group consisting of Fe, Ni, Zr, Ti, B, and P, and more preferably one or more elements selected from the group consisting of Fe, Ni, B, and P.

Examples of a SiX compound in the present embodiment include compounds represented by Si₂X, SiX, and SiX₂. Examples of the compound represented by Si₂X include Si₂Fe, Si₂Ni, Si₂Co, Si₂Ti, Si₂Zr, and Si₂Cr.

Note that, the SiX compound phase may be composed of only one kind of compound phase, or may be composed of two or more kinds of phases such as a SiFe compound phase with a SiB compound phase or a SiP compound phase, or a SiB compound phase with a SiP compound phase.

A content proportion of the SiX compound phase in the Si-based powder in the present embodiment may be more than 0 mass%, and is preferably 5 mass% to 70 mass%. Here, the content proportion is preferably 5 mass% or more, more preferably 8 mass% or more, and still more preferably 10 mass% or more, from the viewpoint of obtaining good cycle characteristics. In addition, the content proportion is preferably 70 mass% or less, more preferably 50 mass% or less, and still more preferably 30 mass% or less.

The SnCu compound phase and the AlCu compound phase in the present embodiment may be contained in the Si-based powder together with the Si phase and the SiX compound phase.

The SnCu compound phase is generally contained as SnCu compound particles in the Si-based powder. The SnCu compound particles are preferably particles in which 95 mass% or more thereof is composed of the SnCu compound phase, and may be particles composed only of the SnCu compound phase. The SnCu compound phase may be contained in the Si-based powder as Sn or Cu in the case of other than the SnCu compound particles.

The AlCu compound phase is generally contained as AlCu compound particles in the Si-based powder. The AlCu compound particles are preferably particles in which 95 mass% or more thereof is composed of the AlCu compound phase, and may be particles composed only of the AlCu compound phase. The AlCu compound phase may be contained in the Si-based powder as Al or Cu in the case of other than the AlCu compound particles.

The SnCu compound phase and the AlCu compound phase have a theoretical capacity lower than that of Si and higher than that of the SiX compound. For example, while the theoretical capacity of a SiZr compound (SiX compound) is 100 mAh/g, the theoretical capacity of the SnCu compound is about 500 mAh/g, and the theoretical capacity of the AlCu compound is about 700 mAh/g.

Therefore, by containing the SnCu compound phase or the AlCu compound phase in the Si-based powder, a Li ion diffusion path is easily ensured. In addition, a degree of expansion due to the reaction with Li ions is smaller in the SnCu compound or the AlCu compound than in the simple substance of Si or Sn having high reactivity with Li ions. Therefore, by containing the SnCu compound phase or the AlCu compound phase, adverse influences on the cycle characteristics can be prevented to a low level. Further, the SnCu compound or the AlCu compound also has an effect of improving the conductivity, similar to the SiX compound.

The SnCu compound phase in the present embodiment may be an alloy of Sn and Cu, or may be an alloy containing metals other than Sn and Cu in addition to Sn and Cu.

The AlCu compound phase in the present embodiment may be an alloy of Al and Cu, or may be an alloy containing metals other than Al and Cu in addition to Al and Cu.

A total content proportion of the SnCu compound phase and the AlCu compound phase in the Si-based powder in the present embodiment is preferably 0.1 mass% to 15 mass%, more preferably 0.3 mass% to 10 mass%, and still more preferably 0.5 mass% to 8 mass%. Here, the content proportion is preferably 0.1% or more, more preferably 0.3% or more, and still more preferably 0.5% or more, from the viewpoint of obtaining a high discharge capacity. In addition, the content proportion is preferably 15 mass% or less, more preferably 10 mass% or less, and still more preferably 8 mass% or less, from the viewpoint of a ratio of an actual discharge capacity to the theoretical capacity of the negative electrode active material, that is, an active material utilization rate.

In the case where the Si-based powder in the present embodiment contains at least one of the SnCu compound phase and the AlCu compound phase, a ratio of the content proportion in the Si-based powder represented by {SiX compound phase/(SnCu compound phase + AlCu compound phase)} is preferably 1 to 300. Here, the mass ratio is preferably 1 or more, more preferably 3 or more, still more preferably 5 or more, and particularly preferably 7 or more, from the viewpoint of suppressing a decrease in cycle characteristics. On the other hand, the mass ratio is preferably 300 or less, more preferably 200 or less, and still more preferably 100 or less, from the viewpoint of obtaining a high initial discharge capacity.

The Si-based powder in the present embodiment may further contain other compound phases in addition to the Si phase, the SiX compound phase, the SnCu compound phase (optionally), and the AlCu compound phase (optionally), as long as the effects of the present invention are not impaired.

Examples of the other compound phase include a SiCu compound phase.

On the other hand, in the Si-based powder in the present embodiment, it is preferable that a total content proportion of elements other than Si, Sn, Al, Cu, and X constituting the Si phase, the SiX compound phase, the SnCu compound phase, and the AlCu phase is as small as possible, and it is more preferable that other elements are not contained.

The other element may be contained as, for example, an inevitable impurity, and specific examples thereof include nitrogen (N), sulfur (S), phosphorus (P), and oxygen (O). In this case, the content proportion of each element is preferably N ≤ 0.10 mass%, S ≤ 0.10 mass%, P ≤ 0.10 mass%, and O ≤ 15 mass%, and a total thereof is preferably 5 mass% or less.

A content proportion of the Si-based powder in the Si-containing granulated body is preferably 50 mass% to 90 mass%. Here, the content proportion is preferably 50% or more, more preferably 55% or more, and still more preferably 60% or more, from the viewpoint of obtaining a good discharge capacity. In addition, the content proportion is preferably 90 mass% or less, more preferably 88 mass% or less, and still more preferably 86 mass% or less, from the viewpoint of obtaining the cycle characteristics.

### <Carbon Material>

The carbon material in the present embodiment is a material that binds primary particles, which is the Si-based powder, to each other and coats the surface of the Si-based powder.

The carbon material may be, for example, a material obtained by carbonizing a part or all of a polymer material containing carbon atoms by firing.

A content proportion (mass%) of carbon with respect to a total of the Si-based powder, the carbon material, and any other optional component is the carbon amount in the carbon coating parameter A. That is, a content proportion of the carbon material contributes to the carbon amount, but in the case where the Si-containing granulated body in the present embodiment further contains a polymer material, an amount of carbon constituting the polymer material also contributes to the carbon amount.

In the case where the Si-containing granulated body contains two or more kinds of carbon materials or the case where the Si-containing granulated body contains a polymer material in addition to the carbon material, the total content of carbon in them is the content proportion of carbon, that is, the carbon amount.

As described above, the carbon amount is preferably 1.0 mass% to 30.0 mass%, more preferably 4.0 mass% to 20.0 mass%, and still more preferably 6.0 mass% to 15.0 mass%.

An average thickness of a film obtained by coating the surface of the Si-based powder with the carbon material is preferably 1.0 nm to 25 nm. Here, the average thickness is preferably 1.0 nm or more, more preferably 1.5 nm or more, still more preferably 2.0 nm or more, and particularly preferably 2.5 nm or more, from the viewpoint of ignitability. In addition, the average thickness is preferably 25 nm or less, more preferably 20 nm or less, still more preferably 18 nm or less, and particularly preferably 15 nm or less, from the viewpoint of the capacity.

The average thickness can be determined by observing the surface of the Si-containing granulated body at a magnification of 200,000 times using a transmission electron microscope (TEM), and calculating, as the average thickness, an average value of thicknesses of the film of the carbon material at five portions.

### <Polymer Material Containing Carbon Atoms>

The Si-containing granulated body in the present embodiment may contain a polymer material containing carbon atoms. The polymer material containing carbon atoms is also preferably used as a precursor of the carbon material.

That is, the Si-based powder, which is primary particles, is coated with the polymer material containing carbon atoms, granulated to form secondary particles, and then fired. Accordingly, a part or all of the polymer material can be carbonized, and a Si-containing granulated body in which the surface of the Si-based powder is coated with the carbon material and the Si-based powders are bonded to each other with the carbon material can be obtained. Note that, in the case where all of the polymer material is carbonized, the polymer material is not contained in the Si-containing granulated body, and the carbon amount in the carbon coating parameter A is entirely derived from the carbon material.

Examples of the polymer material containing carbon atoms include a phenol resin, a polyvinylidene fluoride resin, a polyethylene resin, a polypropylene resin, a polyvinyl alcohol resin, a polystyrene resin, a furan resin, a cellulose resin, an epoxy resin, polyvinyl chloride, a polymethyl methacrylate resin, pitch, coke, bio-waste, a polyfurfuryl alcohol resin, a polyimide resin, and any combination thereof.

The polymer material preferably has a function as a binder. From the viewpoint of binding properties, the polymer material is preferably, for example, a phenol resin, a polyvinylidene fluoride resin, a polyvinyl alcohol resin, or a polyimide resin, and more preferably a phenol resin or a polyvinyl alcohol resin. As the phenol resin, both a novolac resin and a resol resin are preferred, and a resol resin is preferred from the viewpoint of dispersability in the slurry. Only one kind of the polymer material may be used, or two or more kinds thereof may be used in combination.

The polymer material is preferably a phenol resin, a polyvinylidene fluoride resin, a polyvinyl alcohol resin, or a polyimide resin, and more preferably a phenol resin or a polyvinyl alcohol resin, from the viewpoint of conductivity when at least a part of the polymer material is carbonized by a heat treatment to form a carbon material. As the phenol resin, both a novolac resin and a resol resin are preferred, and a resol resin is preferred from the viewpoint of dispersability in the slurry.

### <SiC>

The Si-containing granulated body in the present embodiment may contain SiC generated in a production process. However, since SiC is a component that leads to a decrease in capacity as a negative electrode material, a content thereof is preferably small.

The content proportion of SiC in the Si-containing granulated body is preferably less than 15%, more preferably 10% or less, and still more preferably 8% or less. The lower limit of the content proportion of SiC is not particularly limited, and is preferably small, and is generally 0.1% or more.

The content proportion of SiC in the Si-containing granulated body is a percentage of a ratio of an area of a peak derived from SiC to an area of all peaks in an X-ray diffraction (XRD) pattern obtained by performing powder XRD measurement on the Si-containing granulated body.

The content proportion of SiC can be adjusted by the time, temperature, and the like of the heat treatment performed when the surface of the Si-based powder is coated with the carbon material.

### <Si-containing Granulated Body>

The Si-containing granulated body in the present embodiment is secondary particles granulated by binding Si-based powders, which are primary particles having surfaces coated with the carbon material, with the carbon material, and the average secondary particle diameter thereof is 2 µm or more, preferably 2 µm to 20 µm, more preferably 3 µm to 18 µm, and still more preferably 4 µm to 15 µm.

Here, the average secondary particle diameter is 2 µm or more, preferably 3 µm or more, and more preferably 4 µm or more, from the viewpoint of being less likely to ignite and improving the safety, from the viewpoint of the water resistance, and from the viewpoint of reducing the amount of the binder required as a negative electrode material. In addition, the average secondary particle diameter is preferably 20 µm or less, more preferably 18 µm or less, and still more preferably 15 µm or less, from the viewpoint of realizing good cycle characteristics.

Note that, the average secondary particle diameter of the Si-containing granulated body in the present description means an average particle diameter of granulated bodies determined based on a particle shape distribution measurement result using an image type particle size distribution measuring device. As the image type particle size distribution measuring device, a device of morphology series manufactured by Malvern Panalytical can be adopted.

In addition, for example, in the case where the granulation is performed by spray-drying a slurry mixture of the primary particles, the average secondary particle diameter of the Si-containing granulated body can be adjusted based on a solid content concentration in the slurry, a pressure during drying, or the like.

A carbon coating rate on the surface of the Si-containing granulated body, which is secondary particles, is preferably 14 mass% to 99 mass%, more preferably 30 mass% to 95 mass%, and still more preferably 40 mass% to 90 mass%. Here, the carbon coating rate is preferably 14 mass% or more, more preferably 30 mass% or more, and still more preferably 40 mass% or more, from the viewpoint of the ignitability. In addition, the carbon coating rate is preferably 99 mass% or less, more preferably 95 mass% or less, and still more preferably 90 mass% or less, from the viewpoint of a decrease in capacity.

Note that, the carbon coating rate on the surface of the Si-containing granulated body in the present description means a proportion of carbon atoms (C) in a spectrum obtained by analyzing the surface of the Si-containing granulated body using X-ray photoelectron spectroscopy (XPS).

An aspect ratio of the Si-containing granulated body in the present embodiment is preferably 1.0 to 1.8, more preferably 1.0 to 1.5, and still more preferably 1.0 to 1.3. Here, the aspect ratio is preferably 1.8 or less, more preferably 1.5 or less, and still more preferably 1.3 or less, from the viewpoint of obtaining good cycle characteristics.

Note that, the aspect ratio of the Si-containing granulated body in the present description is a value obtained by measuring the Si-containing granulated body using a scanning electron microscope (SEM). Specifically, the Si-containing granulated body is subjected to SEM observation at a magnification of 400 times, and based on the obtained image, the maximum diameter D and the diameter D' perpendicular thereto are measured for each of ten Si-based powders, and the average value of the values represented by D/D' is defined as the aspect ratio. In addition, the aspect ratio of the Si-containing granulated body can be adjusted by changing a spray pressure or a feed rate during spray drying.

The Si-containing granulated body may further contain other components in addition to the Si-based powder, the carbon material coating the surface of the Si-based powder, optional polymer material containing carbon atoms, and SiC unintentionally contained. Examples of the other component include SiO₂.

### <<Method for Producing Negative Electrode Material Powder for Lithium-Ion Battery>>

A method for producing the negative electrode material powder for a lithium-ion battery according to the present embodiment is not particularly limited, and includes, for example, the following steps in order.
Step 1: a step of preparing primary particles containing a Si phase and a SiX compound phase
Step 2: a step of mixing the primary particles containing the Si phase and the SiX compound phase with a polymer material containing carbon atoms in a wet manner to obtain a slurry mixture
Step 3: a step of spray-drying the slurry mixture
Step 4: a step of subjecting the spray-dried mixture to a heat treatment

Hereinafter, respective steps are described in order.

### <Step 1: Step of Preparing Primary Particles>

The step 1 is a step of preparing primary particles containing a Si phase and a SiX compound phase.

Specifically, respective raw materials are weighed so as to have a desired composition, and a molten alloy obtained by melting the raw materials using a melting unit such as an arc furnace, a high-frequency induction furnace, or a heating furnace is quenched using, for example, an atomization method to obtain, as a quenched metal, alloy particles composed of the Si phase and the SiX compound phase.

In the case where the Si-based powder contains a SnCu compound phase and an AlCu compound phase in addition to the Si phase and the SiX compound phase, alloy particles in which the SnCu compound phase and the AlCu compound phase are dispersed in the Si phase and the SiX compound phase can also be obtained by using a raw material containing Sn, Cu, and Al in addition to Si and X as the raw materials.

In the case where the average primary particle diameter of the alloy particles obtained above is large, pulverization may be performed as necessary to obtain a Si-based powder having a small average primary particle diameter. On the other hand, in order to prevent the average primary particle diameter of the alloy particles from being less than 0.1 µm, for example, the particle diameter is appropriately measured while sampling during the pulverization, thereby obtaining a predetermined particle diameter.

In addition, metal particles composed of the Si phase, alloy particles composed of the SiX compound phase, alloy particles composed of the SnCu compound phase (optionally), and alloy particles composed of the AlCu compound phase (optionally) may be independently obtained, and then mixed to obtain the Si-based powder as primary particles containing the desired Si phase and SiX compound phase.

In the atomization method, a gas such as N₂, Ar, or He is sprayed at a high pressure, for example, 1 MPa to 10 MPa, against the molten alloy that is discharged into an atomization chamber and that continuously (rod-like) flows downward, whereby the molten alloy is pulverized and cooled. The cooled molten metal approaches a spherical shape while free-falling in the atomization chamber in a semi-molten state, and powdery particles can be obtained. In addition, high-pressure water may be sprayed instead of the gas from the viewpoint of improving a cooling effect.

In some cases, it is also possible to obtain a foiled particles by using a roll quenching method instead of the atomization method.

The particles obtained above are pulverized as necessary.

For the pulverization, suitable pulverization units such as a ball mill, a bead mill, a disk mill, a coffee mill, and mortar pulverization can be adopted. The pulverization conditions are adjusted so as to obtain a desired average primary particle diameter.

In the case where the primary particles containing the Si phase and the SiX compound phase contain the SnCu compound phase and the AlCu compound phase in addition to the Si phase and the SiX compound phase, and the particles containing the respective phases are independently obtained and then mixed, the respective particles may be pulverized and then mixed, or may be mixed and then pulverized collectively.

The pulverization may be wet pulverization or dry pulverization, and in the case of adopting wet pulverization, desolvation, solvent substitution, drying, and the like may be performed. In addition, the average primary particle diameter of the primary particles containing the Si phase and the SiX compound phase can be controlled by changing the units and conditions for the pulverization. In addition, in order to prevent the average primary particle diameter from being less than 0.1 µm, the particle diameter is appropriately measured while sampling during the pulverization, thereby obtaining a predetermined particle diameter.

### <Step 2: Step of Obtaining Slurry Mixture>

The step 2 is a step of mixing the primary particles containing the Si phase and the SiX compound phase obtained in the step 1 with a polymer material containing carbon atoms in a wet manner to obtain a slurry mixture.

By mixing the primary particles containing the Si phase and the SiX compound phase with the polymer material containing carbon atoms in a wet manner and performing the subsequent step 3, the surfaces of the primary particles are coated with the polymer material, and the polymer material serves as a binder, to form secondary particles in which the primary particles are bonded to each other. Then, by carbonizing the polymer material by firing in the step 4, a Si-containing granulated body in which the surface of the Si-based powder is coated with the carbon material and the Si-based powders are bonded to each other with the carbon material can be obtained.

As described above, examples of the polymer material containing carbon atoms include a phenol resin, a polyvinylidene fluoride resin, a polyethylene resin, a polypropylene resin, a polyvinyl alcohol resin, a polystyrene resin, a furan resin, a cellulose resin, an epoxy resin, polyvinyl chloride, a polymethyl methacrylate resin, pitch, coke, bio-waste, a polyfurfuryl alcohol resin, a polyimide resin, and any combination thereof.

A solvent used when the primary particles containing the Si phase and the SiX compound phase obtained in the step 1 and the polymer material containing carbon atoms are mixed in a wet manner is not particularly limited. Note that, in the case where wet pulverization is adopted when obtaining the primary particles containing the Si phase and the SiX compound phase in the step 1, the primary particles may be subjected to the step 2 without removing the solvent used during the pulverization, and the polymer material containing carbon atoms may be further added thereto to obtain a slurry.

Examples of the solvent include ethanol, N-methyl-2-pyrrolidone, isopropyl alcohol, cyclohexane, and toluene.

A mixing ratio of the primary particles containing the Si phase and the polymer material containing carbon atoms is determined such that the carbon coating parameter A in the Si-based particles to be obtained is more than 15, preferably more than 48, or the like.

That is, an appropriate mixing ratio of the polymer material containing carbon atoms changes depending on the average primary particle diameter of the primary particles containing the Si phase and the SiX compound phase.

For example, in the case of using a phenol resin as the polymer material containing carbon atoms, a blending ratio of the phenol resin is preferably 1 to 100 parts by mass, more preferably 5 to 70 parts by mass, and still more preferably 10 to 50 parts by mass, with respect to 100 parts by mass as a total of the Si-based powder contained in the obtained slurry mixture. Here, the blending ratio is preferably 1 part by mass or more, more preferably 5 parts by mass or more, and still more preferably 10 parts by mass or more, from the viewpoint of coating the surface of the Si-based powder without shortage. In addition, the blending ratio is preferably 100 parts by mass or less, more preferably 70 parts by mass or less, and still more preferably 50 parts by mass or less, from the viewpoint of obtaining a high capacity.

A part or all of the polymer material containing carbon atoms is carbonized by the heat treatment in the step 4 to be described later to obtain a carbon material.

The average primary particle diameter of the Si-based powder and the mixing ratio of the Si-based powder and the polymer material containing carbon atoms are determined such that the value of the carbon coating parameter A of the Si-based powder to be obtained is more than 15.

Here, the mixing ratio can be determined based on a value of a carbon coating parameter B represented by the following formula. 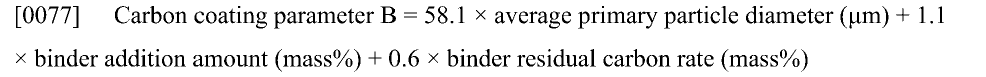 Carbon coating parameter B = 58.1 × average primary particle diameter (µm) + 1.1 × binder addition amount (mass%) + 0.6 × binder residual carbon rate (mass%)

In the carbon coating parameter B, the average primary particle diameter (µm) means the average primary particle diameter of the Si-based powder. The binder addition amount means the content (mass%) of the polymer material containing carbon atoms in the Si-containing granulated body to be finally obtained. The binder residual carbon rate means a proportion (mass%) of the content of carbon constituting the polymer material containing carbon atoms to the content of carbon in the Si-containing granulated body to be finally obtained. That is, if the heat treatment in the step 4 to be described later is not performed and the surface of the Si-based powder is not coated with the carbon material, the binder residual carbon rate is 100 (mass%).

In the carbon coating parameter B, 58.1, which is a coefficient of the average primary particle diameter of the Si-based powder, 1.1, which is a coefficient of the binder addition amount, and 0.6, which is a coefficient of the binder residual carbon rate, are all values derived from experiments.

The value of the carbon coating parameter B is preferably 15 or more, and more preferably 35 or more, from the viewpoint of the safety and the water resistance. In addition, it is preferably 48 or more, and more preferably 55 or more, from the viewpoint of the cycle characteristics. The upper limit of the carbon coating parameter B is not particularly limited, and is generally 200 or less.

### <Step 3: Step of Spray-drying Slurry Mixture>

The step 3 is a step of spray-drying the slurry mixture obtained in step 2, whereby a granulated body of secondary particles in which primary particles having surfaces coated with the polymer material containing carbon atoms are bonded to each other can be obtained.

As the spray-drying method, a known method can be adopted, and for example, a spray drying method can be adopted.

The spray drying method is a method in which the slurry is formed into fine droplets, and the droplets are instantaneously dried with hot air to remove a dispersion medium, thereby forming secondary particles in which the primary particles containing the Si phase and the SiX compound phase are bonded to each other in a granular shape by a binder.

The particle diameter of the secondary particles can be controlled based on the solid content concentration in the slurry, the pressure during drying, or the like.

With the step 2 and the step 3, the surface of the Si-based powder as primary particles can be in a state of being widely and homogeneously coated with the polymer material containing carbon atoms. Then, by subsequently performing the step 4, at least a part of the polymer material containing carbon atoms is carbonized while maintaining the coating state. As a result, direct contact of the Si phase and the SiX compound phase with the electrolytic solution or moisture can be suppressed, and the effects of the present invention can be suitably obtained. Further, since a good conductive path is ensured, better battery characteristics are realized.

### <Step 4: Step of Subjecting Spray-dried Mixture to Heat Treatment>

The step 4 is a step of subjecting the spray-dried mixture obtained in the step 3 to a heat treatment. Accordingly, at least a part of the polymer material containing carbon atoms coated on the surface of the Si-based powder in the step 3 can be carbonized.

The conditions of the heat treatment are not particularly limited, and for example, a heating temperature is preferably 400°C to 1100°C, more preferably 600°C to 1000°C, and still more preferably 700°C to 950°C. Here, the heating temperature is preferably 400°C or higher, more preferably 600°C or higher, and still more preferably 700°C or higher, from the viewpoint of promoting the carbonization and ensuring the conductive path. In addition, the heating temperature is preferably 1100°C or lower, more preferably 1000°C or lower, and still more preferably 950°C or lower, from the viewpoint of suppressing generation of an undesired compound such as SiC.

A heat treatment time is also not particularly limited, and is, for example, preferably 0.1 hours to 10 hours, more preferably 0.5 hours to 6 hours, and still more preferably 1 hour to 4 hours. Here, the heating time is preferably 0.1 hours or longer, more preferably 0.5 hours or longer, and still more preferably 1 hour or longer, from the viewpoint of promoting the carbonization and carbonizing the polymer material. In addition, the heating time is preferably 10 hours or shorter, more preferably 6 hours or shorter, and still more preferably 4 hours or shorter, from the industrial viewpoint.

Regarding the heating temperature and the heating time of the heat treatment, it has been found that, when the following heat treatment parameter C satisfied a specific range, a Si-containing granulated body having good battery characteristics in addition to the safety and the water resistance can be obtained. 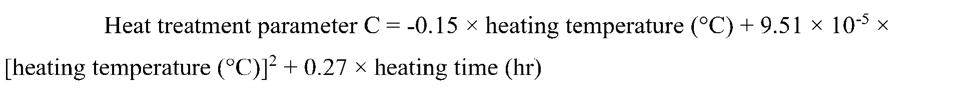 Heat treatment parameter C = -0.15 × heating temperature (°C) + 9.51 × 10-5 × [heating temperature (°C)]2 + 0.27 × heating time (hr)

The heat treatment parameter C is preferably less than -15, more preferably -20 or less, and still more preferably -25 or less. The lower limit is not particularly limited, and is generally -40 or more.

The atmosphere in the heat treatment is preferably, for example, a nitrogen atmosphere or an argon atmosphere.

The pressure in the heat treatment is preferably the atmospheric pressure.

The method of the heat treatment is not particularly limited, and examples thereof include a heat treatment using a rotary kiln and a heat treatment using a shuttle kiln. Among them, a heat treatment using a rotary kiln is preferred from the viewpoint of uniformly subjecting the powder to a heat treatment.

### <<Lithium-Ion Battery>>

### <Negative Electrode>

In a lithium-ion battery, a negative electrode using the negative electrode material powder for a lithium-ion battery according to the present embodiment is preferably used.

The negative electrode in the present embodiment includes a conductive substrate and a conductive film laminated on a surface of the conductive substrate. The conductive film contains at least the negative electrode material powder for a lithium-ion battery according to the present embodiment, and the negative electrode material powder functions as a negative electrode active material.

The conductive substrate functions as a current collector. Examples of a material thereof include Cu, a Cu alloy, Ni, a Ni alloy, Fe, and a Fe-based alloy, and among them, Cu and a Cu alloy are preferred.

Specific examples of a form of the conductive substrate include a foil form and a plate form. Among them, a foil form is preferred from the viewpoint of reducing a volume of the battery and improving a degree of freedom in form.

Examples of a material of a binder for forming the conductive film include a polyvinylidene fluoride (PVdF) resin, a fluorine resin such as polytetrafluoroethylene, a polyvinyl alcohol resin, a polyimide resin, a polyamide resin, a polyamideimide resin, a styrene-butadiene rubber (SBR), or polyacrylic acid. These may be used alone or in combination of two or more kinds thereof. Among them, a polyimide resin is particularly preferred from the viewpoint of mechanical strength, resistance to volume expansion of the negative electrode active material, suppression of peeling off from the conductive substrate, and the like.

The conductive film may contain a conductive aid, if necessary. In the case where a conductive aid is contained, it is easier to ensure a conductive path for electrons.

As the conductive aid, a known conductive aid can be adopted, and examples thereof include carbon and a metal that do not cause a volume change during charging and discharging or that do not deteriorate characteristics due to the charging and discharging due to a slight volume change.

A form of the carbon is not particularly limited, and examples thereof include particulate carbon, fibrous carbon, and flat carbon. Among them, at least one of the particulate carbon or the fibrous carbon is preferred from the viewpoint of forming a conductive network between the Si-containing granulated bodies, and the particulate carbon and the fibrous carbon are more preferably used in combination from the viewpoint of further improving the cycle characteristics.

The kind of the carbon is not particularly limited, and examples thereof include carbon black such as Ketjen black, acetylene black, and furnace black, graphite, a carbon nanotube, a carbon nanofiber, fullerene, graphene, and graphene oxide. Among them, carbon black, graphite, a carbon nanotube, and fullerene are preferred, and Ketjen black and acetylene black are more preferred. Only one kind of these may be used, or two or more kinds thereof may be used in combination.

Examples of the particulate carbon include carbon black, graphite, hard carbon, and soft carbon, and more specific examples of the carbon black include Ketjen black, acetylene black, and furnace black.

Examples of the fibrous carbon include a carbon nanotube (CNT) and a carbon nanofiber (CNF). As the carbon nanotube, either a single-walled carbon nanotube (SWCNT) or a multi-walled carbon nanotube (MWCNT) can be adopted.

Examples of the metal used as the conductive aid include Ni, Cr, and a SUS (stainless steel) alloy.

The conductive film may contain an aggregate, if necessary. In the case where an aggregate is contained, expansion and contraction of the negative electrode during charging and discharging can be easily suppressed, and collapse of the negative electrode can be suppressed, so that the cycle characteristics can be further improved.

The negative electrode in the present embodiment can be produced by, for example, adding necessary amounts of the negative electrode active material, and, if necessary, a conductive aid and an aggregate to a binder dissolved in an appropriate solvent to form a paste, applying the paste to the surface of the conductive substrate, drying it, and optionally subjecting it to compaction, a heat treatment, or the like.

In the case of forming a lithium-ion battery using the negative electrode in the present embodiment, there are no particular limitations on a positive electrode, an electrolyte, a separator, and the like, which are basic components of the battery other than the negative electrode, and any known material can be used.

### <Positive Electrode, Electrolyte, and so on>

Examples of the positive electrode include those in which a layer including a positive electrode active material such as LiCoO₂, LiNiO₂, LiFePO₄, and LiMnO₂ is formed on a surface of a current collector such as an aluminum foil.

Examples of the electrolyte include an electrolytic solution in which a lithium salt is dissolved in a non-aqueous solvent. In addition, it is also possible to use a polymer in which a lithium salt is dissolved, a polymer solid electrolyte in which a polymer is impregnated with the above electrolytic solution, and the like.

Specific examples of the non-aqueous solvent include ethylene carbonate, propylene carbonate, butylene carbonate, dimethyl carbonate, diethyl carbonate, and methyl ethyl carbonate. These may be used alone or in combination of two or more kinds thereof.

Specific examples of the lithium salt include LiPF₆, LiBF₄, LiClO₄, LiCF₃SO₃, and LiAsF₆. These may be used alone or in combination of two or more kinds thereof.

Other battery components include a separator, a can (battery case), and a gasket. As for these, as long as they are generally used in a lithium-ion battery, any of them can be appropriately combined to form a battery.

Note that, the shape of the battery is not particularly limited, and may be any shape such as a cylindrical shape, a rectangular shape, or a coin shape, and can be appropriately selected according to a specific application.

### EXAMPLES

Hereinafter, the present invention is described more specifically using Examples.

### <<Examples 1 to 79 and Comparative Examples 1 and 2>>

### 1. Preparation of Si-based Powder

Respective raw materials were weighed such that Si and optionally Sn, Cu, Al, Fe, Ti, Cr, Mn, Co, Ni, Zr, B, and P had the component proportions (mass%) described in Table 1, and heated and melted using a high-frequency induction furnace to obtain a molten alloy. From the molten alloy, alloy particles in which a SiX compound phase was dispersed in a Si phase or alloy particles in which a SiX compound phase, and a SnCu compound phase or an AlCu compound phase were dispersed in a Si phase were obtained by a gas atomization method.

An argon atmosphere was used as an atmosphere during the preparation of the molten alloy and the gas atomization. In addition, during the gas atomization, a high-pressure (4 MPa) argon gas was sprayed onto the molten alloy falling like a rod in the atomization chamber.

The obtained particles were mechanically finely pulverized using a wet bead mill to obtain a slurry in which the Si-based powder was dispersed. Ethanol was used as the solvent.

The composition of each phase constituting the obtained Si-based powder is as shown in "phase ratio (mass%)" in Table 2. Note that, in Tables 1 and 2, "-" means not contained.

### 2. Preparation of Slurry Mixture

A resol resin as a polymer material containing carbon atoms was added to the slurry obtained above in which the Si-based powder was dispersed to obtain a slurry mixture.

The addition amount of the resol resin was 1 to 100 parts by mass with respect to 100 parts by mass of the Si-based powder in the slurry mixture. The solid content concentration in the slurry mixture was 40 mass%.

### 3. Spray-drying of Slurry Mixture

The slurry mixture obtained above was spray-dried by a spray drying method to obtain secondary particles in which Si-based powders having surfaces coated with the resol resin were bound to each other.

The spray drying conditions were a spray temperature of 150°C, a spray pressure of 0.3 MPa, and a supply rate of 1 kg/h.

### 4. Heat Treatment

The secondary particles obtained above were charged into a rotary kiln and subjected to a heat treatment at the temperature and the time shown in Table 2 under a nitrogen atmosphere to carbonize a part or all of the resol resin, thereby obtaining a negative electrode material powder for a lithium-ion battery.

Table 2 also shows the value of the heat treatment parameter C represented by the formula described below.

### <<Evaluation: Si-based Powder>>

### <Average Primary Particle Diameter>

For the Si-containing granulated body, the median diameter (D50) determined based on the volume-based particle size distribution of the slurry before granulation measured using a laser diffraction/scattering particle size distribution measuring device was defined as the average primary particle diameter of the Si-based powder. The results are shown in Table 2.

### <Carbon Coating Parameter A>

By analyzing the Si-containing granulated body using the combustion infrared absorption method, the carbon amount in the Si-based powder, which is the content proportion of carbon with respect to the total of the Si-based powder, the carbon material, and any other optional component, that is, the entire Si-containing granulated body, was determined. The results are shown in Table 2.

In addition, Table 2 also shows values represented by the carbon coating parameter A using the carbon amount and the average primary particle diameter obtained above.

### <<Evaluation: Si-containing Granulated Body>>

### <Average Secondary Particle Diameter>

For the Si-containing granulated body, the average secondary particle diameter was determined by performing particle shape distribution measurement using an image type particle size distribution measuring device (Morphologi series, Morphologi 4, manufactured by Malvern Panalytical). The results are shown in Table 3.

### <Aspect Ratio>

The Si-containing granulated body was subjected to SEM observation at a magnification of 400 times, and based on the obtained image, the maximum diameter D and the diameter D' perpendicular thereto were measured for each of ten Si-containing granulated bodies, and the average value of the values represented by D/D' was defined as the aspect ratio. The results are shown in Table 3.

### <Carbon Coating Rate>

For the Si-containing granulated body, the surface of the Si-containing granulated body was analyzed using X-ray photoelectron spectroscopy (XPS). The proportion of the carbon atoms (C) in the obtained spectrum was determined, and the carbon coating rate (mass%) on the surface of the Si-containing granulated body was determined. The results are shown in Table 3.

### <SiC Content Proportion>

The powder X-ray diffraction (XRD) measurement was performed on the Si-containing granulated body, the ratio of the area of the peak derived from SiC to the area of all peaks in the obtained XRD pattern was determined, and the content proportion of SiC was determined. The results are shown in Table 3.

### <<Evaluation: Safety>>

The Si-containing granulated body was subjected to a small gas flame ignition test as a second type of hazardous material test by the Fire Defense Law.

Those not ignited within 10 seconds after the small gas flame was brought close were regarded as non-dangerous substances, evaluated to be passed, and indicated by "A" in Table 3, and those ignited within 10 seconds were regarded as dangerous substances, evaluated to be failed, and indicated by "B" in Table 3.

### <<Evaluation: Water Resistance>>

The Si-containing granulated body (1 g) was charged into 13 mL of pure water, and a total hydrogen generation amount until 336 hours elapsed from the start of the measurement was measured by a sensor gas chromatograph.

Those having a hydrogen generation amount of 100 ppm by mass or less were regarded as passed and indicated by "A" in Table 3, and those having a hydrogen generation amount of more than 100 ppm by mass were regarded as failed and indicated by "B" in Table 3.

### <<Evaluation: Battery Characteristics>>

### <Preparation of Coin-type Battery for Charging and Discharging Test>

The negative electrode active material (100 parts by mass) for a lithium-ion battery ,which is the Si-containing granulated body, 5 parts by mass of acetylene black (manufactured by Denka Company Limited) as a conductive aid, and 15 parts by mass of a polyimide (thermoplastic resin) as a binder were blended and mixed with N-methyl-2-pyrrolidone (NMP) as a solvent to thereby prepare a paste containing a negative electrode material.

The paste was applied to a surface of a stainless steel (SUS) 316L foil (thickness: 20 µm) serving as a current collector by a doctor blade method, followed by drying, compaction by roll pressing, and punching on a disk having a diameter of 11 mm, to prepare a test electrode.

Next, a Li foil (thickness: 500 µm) was punched into substantially the same shape as the test electrode to form a counter electrode.

The test electrode was housed in a positive electrode can, the counter electrode was housed in a negative electrode can, and a separator made of a polyolefin-based microporous film was disposed between the test electrode and the counter electrode. Note that, the test electrode should be a negative electrode in a lithium-ion battery, but when a Li foil is used as the counter electrode, the Li foil is the negative electrode and the test electrode is the positive electrode.

Into the positive electrode can and the negative electrode can, a non-aqueous electrolytic solution prepared by dissolving LiPF₆ at a concentration of 1 mol/L in a mixed solvent of ethylene carbonate (EC):diethyl carbonate (DEC) = 1:1 (volume ratio) was injected, and the positive electrode can and the negative electrode can were fixed by fastening to prepare a coin-type battery for a charging and discharging test.

### <Charging and Discharging Test>

The prepared coin-type battery for a charging and discharging test was subjected to one cycle including constant-current charging and discharging at a current value of 0.2 mA. The value obtained by dividing the capacity (mAh) used during occlusion or release of Li by an active material amount (g) was the initial charge capacity or the initial discharge capacity, and the proportion of the initial discharge capacity with respect to the initial charge capacity was obtained as the initial Coulombic efficiency. The results are shown in Table 3.

In addition, the theoretical capacity of each negative electrode material (each negative electrode active material) was calculated based on the phase ratios of the Si phase, the SiX compound phase, the SnCu compound phase, and the AlCu compound phase in the Si-containing granulated body. Then, the initial discharge capacity with respect to the theoretical capacity was determined as a utilization rate (active material utilization rate, %) with respect to the theoretical capacity of the negative electrode active material. The results are shown in Table 3.

In the second and subsequent cycles, the charging and discharging test was performed at a rate of 1/5C and up to 50 cycles was performed. Here, regarding the C rate, the current value for (charging and) discharging the amount of electricity required to (charge and) discharge the electrode in one hour is defined as 1C, and thus the 1/5C rate means charging or discharging in 5 hours.

A proportion of the discharge capacity at the 50th cycle with respect to the initial discharge capacity at the first cycle, that is, a discharge capacity retention rate, was evaluated as a cycle retention rate (%). The results are shown in Table 3.

**[Table 1]**

| | Component (mass%) | | | | | | | | | | | | |
|---|---|---|---|---|---|---|---|---|---|---|---|---|---|
| | Si | Sn | Cu | Fe | Ti | Cr | Mn | Co | Ni | Zr | Al | B | P |
| Example 1 | 87.02 | 0.36 | 0.23 | 12.40 | - | - | - | - | - | - | - | - | - |
| Example 2 | 81.27 | 0.32 | 0.21 | 18.20 | - | - | - | - | - | - | - | - | - |
| Example 3 | 85.93 | 0.07 | 0.04 | 13.96 | - | - | - | - | - | - | - | - | - |
| Example 4 | 99.75 | 0.09 | 0.06 | 0.10 | - | - | - | - | - | - | - | - | - |
| Example 5 | 81.53 | 3.51 | 2.26 | 12.70 | - | - | - | - | - | - | - | - | - |
| Example 6 | 93.37 | 0.43 | 0.28 | 5.92 | - | - | - | - | - | - | - | - | - |
| Example 7 | 73.52 | 7.72 | 4.96 | 13.80 | - | - | - | - | - | - | - | - | - |
| Example 8 | 82.96 | 0.08 | 0.05 | 16.92 | - | - | - | - | - | - | - | - | - |
| Example 9 | 65.83 | 1.08 | 0.69 | 32.40 | - | - | - | - | - | - | - | - | - |
| Example 10 | 81.95 | 0.70 | 0.45 | 16.89 | - | - | - | - | - | - | - | - | - |
| Example 11 | 85.30 | 0.25 | 0.16 | 14.30 | - | - | - | - | - | - | - | - | - |
| Example 12 | 79.72 | 0.67 | 0.43 | 19.17 | - | - | - | - | - | - | - | - | - |
| Example 13 | 92.14 | 0.28 | 0.18 | 7.40 | - | - | - | - | - | - | - | - | - |
| Example 14 | 84.62 | 0.21 | 0.13 | 15.03 | - | - | - | - | - | - | - | - | - |
| Example 15 | 90.63 | 0.10 | 0.06 | 9.21 | - | - | - | - | - | - | - | - | - |
| Example 16 | 91.85 | 0.53 | 0.34 | 7.28 | - | - | - | - | - | - | - | - | - |
| Example 17 | 87.99 | 0.47 | 0.30 | 11.24 | - | - | - | - | - | - | - | - | - |
| Example 18 | 84.66 | 0.08 | 0.05 | 15.21 | - | - | - | - | - | - | - | - | - |
| Example 19 | 80.85 | 0.10 | 0.06 | 18.98 | - | - | - | - | - | - | - | - | - |
| Example 20 | 90.13 | 0.16 | 0.10 | 9.60 | - | - | - | - | - | - | - | - | - |
| Example 21 | 86.59 | 0.42 | 0.27 | 12.72 | - | - | - | - | - | - | - | - | - |
| Example 22 | 89.88 | 0.11 | 0.07 | 9.94 | - | - | - | - | - | - | - | - | - |
| Example 23 | 86.04 | 0.35 | 0.23 | 13.38 | - | - | - | - | - | - | - | - | - |
| Example 24 | 89.62 | 0.14 | 0.09 | 10.15 | - | - | - | - | - | - | - | - | - |
| Example 25 | 87.92 | 0.53 | 0.34 | 11.21 | - | - | - | - | - | - | - | - | - |
| Example 26 | 89.55 | 0.42 | 0.27 | 9.76 | - | - | - | - | - | - | - | - | - |
| Example 27 | 86.90 | 0.33 | 0.21 | 12.56 | - | - | - | - | - | - | - | - | - |
| Example 28 | 91.12 | 0.53 | 0.34 | 8.02 | - | - | - | - | - | - | - | - | - |
| Example 29 | 86.35 | 0.08 | 0.05 | 12.50 | - | - | - | - | - | - | - | - | 1.03 |
| Example 30 | 89.22 | 0.36 | 0.23 | 9.40 | - | - | - | - | - | - | - | 0.68 | 0.10 |
| Example 31 | 91.29 | 0.19 | 0.12 | 7.47 | - | - | - | - | - | - | - | 0.92 | - |
| Example 32 | 91.12 | 0.08 | 0.05 | 8.63 | - | - | - | - | - | - | - | 0.12 | - |
| Example 33 | 84.72 | 0.09 | 0.06 | 15.14 | - | - | - | - | - | - | - | - | - |
| Example 34 | 90.96 | 0.10 | 0.06 | 8.88 | - | - | - | - | - | - | - | - | - |
| Example 35 | 81.33 | 0.17 | 0.11 | 18.40 | - | - | - | - | - | - | - | - | - |
| Example 36 | 90.70 | 0.07 | 0.05 | 9.17 | - | - | - | - | - | - | - | - | - |
| Example 37 | 84.74 | 0.55 | 0.35 | 14.35 | - | - | - | - | - | - | - | - | - |
| Example 38 | 71.42 | 2.94 | 1.89 | 23.75 | - | - | - | - | - | - | - | - | - |
| Example 39 | 84.08 | 0.52 | 0.34 | 15.06 | - | - | - | - | - | - | - | - | - |
| Example 40 | 86.64 | 0.34 | 0.22 | 12.80 | - | - | - | - | - | - | - | - | - |
| Example 41 | 83.37 | 0.14 | 0.09 | 16.39 | - | - | - | - | - | - | - | - | - |
| Example 42 | 89.95 | 0.46 | 0.29 | 9.30 | - | - | - | - | - | - | - | - | - |
| Example 43 | 86.67 | 0.13 | 0.08 | 13.12 | - | - | - | - | - | - | - | - | - |
| Example 44 | 85.28 | 0.14 | 0.09 | 14.50 | - | - | - | - | - | - | - | - | - |
| Example 45 | 87.37 | - | - | - | 12.63 | - | - | - | - | - | - | - | - |
| Example 46 | 89.45 | - | - | - | - | 10.55 | - | - | - | - | - | - | - |
| Example 47 | 85.09 | - | - | - | - | - | 14.91 | - | - | - | - | - | - |
| Example 48 | 88.77 | - | - | - | - | - | - | 11.23 | - | - | - | - | - |
| Example 49 | 87.46 | - | - | - | - | - | - | - | 12.54 | - | - | - | - |
| Example 50 | 91.01 | - | - | - | - | - | - | - | - | 8.99 | - | - | - |
| Example 51 | 99.45 | - | - | - | - | - | - | - | - | - | - | - | 0.55 |
| Example 52 | 99.42 | - | - | - | - | - | - | - | - | - | - | 0.49 | 0.09 |
| Example 53 | 97.95 | - | - | - | - | - | - | - | - | - | - | 2.05 | - |
| Example 54 | 99.87 | - | - | - | - | - | - | - | - | - | - | - | 0.13 |
| Example 55 | 98.79 | - | - | - | - | - | - | - | - | - | - | 1.13 | 0.08 |
| Example 56 | 87.68 | 0.93 | 0.60 | - | 10.80 | - | - | - | - | - | - | - | - |
| Example 57 | 88.09 | 0.35 | 0.22 | - | - | 11.34 | - | - | - | - | - | - | - |
| Example 58 | 86.93 | 0.32 | 0.21 | - | - | - | 12.54 | - | - | - | - | - | - |
| Example 59 | 88.80 | 0.22 | 0.14 | - | - | - | - | 10.84 | - | - | - | - | - |
| Example 60 | 89.11 | 0.15 | 0.10 | - | - | - | - | - | 10.64 | - | - | - | - |
| Example 61 | 85.90 | 0.82 | 0.53 | - | - | - | - | - | - | 12.75 | - | - | - |
| Example 62 | 97.27 | 0.10 | 0.06 | 0.14 | - | - | - | - | - | - | - | 2.43 | - |
| Example 63 | 99.28 | 0.30 | 0.19 | 0.03 | - | - | - | - | - | - | - | - | 0.20 |
| Example 64 | 97.66 | 0.12 | 0.08 | 0.32 | - | - | - | - | - | - | - | 1.66 | 0.16 |
| Example 65 | 96.71 | 0.10 | 0.06 | 0.10 | - | - | - | - | - | - | - | 3.03 | - |
| Example 66 | 86.41 | - | 0.45 | 12.76 | - | - | - | - | - | - | 0.38 | - | - |
| Example 67 | 83.65 | 0.15 | 0.10 | 16.10 | - | - | - | - | - | - | - | - | - |
| Example 68 | 89.68 | 0.28 | 0.18 | 9.86 | - | - | - | - | - | - | - | - | - |
| Example 69 | 86.05 | 0.25 | 0.16 | 13.53 | - | - | - | - | - | - | - | - | - |
| Example 70 | 81.23 | 0.17 | 0.11 | 18.48 | - | - | - | - | - | - | - | - | - |
| Example 71 | 87.27 | 1.26 | 0.81 | 10.66 | - | - | - | - | - | - | - | - | - |
| Example 72 | 85.38 | 0.56 | 0.36 | 13.70 | - | - | - | - | - | - | - | - | - |
| Example 73 | 87.97 | 0.24 | 0.15 | 11.64 | - | - | - | - | - | - | - | - | - |
| Example 74 | 91.82 | 0.09 | 0.06 | 8.03 | - | - | - | - | - | - | - | - | - |
| Example 75 | 84.37 | 0.12 | 0.08 | 15.43 | - | - | - | - | - | - | - | - | - |
| Example 76 | 59.10 | 1.52 | 0.98 | 38.40 | - | - | - | - | - | - | - | - | - |
| Example 77 | 65.64 | 11.66 | 7.50 | 15.20 | - | - | - | - | - | - | - | - | - |
| Example 78 | 85.98 | 0.08 | 0.05 | 13.89 | - | - | - | - | - | - | - | - | - |
| Example 79 | 88.91 | 0.26 | 0.17 | 10.66 | - | - | - | - | - | - | - | - | - |
| Comparative Example 1 | 84.83 | 0.18 | 0.12 | 14.87 | - | - | - | - | - | - | - | - | - |
| Comparative Example 2 | 91.91 | 0.11 | 0.07 | 7.91 | - | - | - | - | - | - | - | - | - |

**[Table 2]**

| | Phase ratio (mass%) | | | Si-based powder | | | Heat treatment conditions | | |
|---|---|---|---|---|---|---|---|---|---|
| | Si phase | SiX compound phase | SnCu compound phase + AlCu compound phase | Average primary particle diameter (µm) | Carbon amount (mass%) | Carbon coating parameter A | Temperature (°C) | Time (hr) | Heat treatment parameter C |
| Example 1 | 74.5 | 24.9 | 0.6 | 0.60 | 9.5 | 88.1 | 900 | 2.0 | -31.1 |
| Example 2 | 63.0 | 36.5 | 0.5 | 0.89 | 8.9 | 101.6 | 900 | 2.0 | -31.1 |
| Example 3 | 71.9 | 28.0 | 0.1 | 0.71 | 10.9 | 102.1 | 900 | 2.0 | -31.1 |
| Example 4 | 99.7 | 0.2 | 0.1 | 0.45 | 10.3 | 84.0 | 900 | 2.0 | -31.1 |
| Example 5 | 68.8 | 25.5 | 5.8 | 0.81 | 6.2 | 81.5 | 900 | 2.0 | -31.1 |
| Example 6 | 87.4 | 11.9 | 0.7 | 0.92 | 9.6 | 107.5 | 900 | 2.0 | -31.1 |
| Example 7 | 59.6 | 27.7 | 12.7 | 0.56 | 6.6 | 69.6 | 900 | 2.0 | -31.1 |
| Example 8 | 65.9 | 33.9 | 0.1 | 0.20 | 8.8 | 60.9 | 900 | 2.0 | -31.1 |
| Example 9 | 33.2 | 65.0 | 1.8 | 0.70 | 9.7 | 95.0 | 900 | 2.0 | -31.1 |
| Example 10 | 65.0 | 33.9 | 1.2 | 0.48 | 9.4 | 80.7 | 1000 | 2.0 | -25.1 |
| Example 11 | 70.9 | 28.7 | 0.4 | 0.46 | 6.2 | 61.7 | 1100 | 2.0 | -17.1 |
| Example 12 | 60.4 | 38.5 | 1.1 | 0.81 | 10.2 | 104.0 | 700 | 2.0 | -37.5 |
| Example 13 | 84.7 | 14.8 | 0.5 | 0.99 | 11.9 | 124.3 | 800 | 2.0 | -35.3 |
| Example 14 | 69.5 | 30.2 | 0.3 | 0.72 | 6.4 | 77.6 | 900 | 0.5 | -31.1 |
| Example 15 | 81.4 | 18.5 | 0.2 | 0.24 | 8.1 | 58.9 | 900 | 10.0 | -31.5 |
| Example 16 | 84.5 | 14.6 | 0.9 | 0.14 | 8.3 | 54.8 | 850 | 1.0 | -33.4 |
| Example 17 | 76.7 | 22.6 | 0.8 | 0.76 | 1.3 | 51.6 | 900 | 2.0 | -31.1 |
| Example 18 | 69.4 | 30.5 | 0.1 | 0.77 | 16.0 | 134.2 | 900 | 2.0 | -31.1 |
| Example 19 | 61.8 | 38.1 | 0.2 | 0.33 | 25.5 | 162.1 | 900 | 2.0 | -31.1 |
| Example 20 | 80.5 | 19.3 | 0.3 | 0.87 | 2.5 | 64.8 | 900 | 2.0 | -31.1 |
| Example 21 | 73.8 | 25.5 | 0.7 | 4.89 | 9.1 | 335.2 | 900 | 2.0 | -31.1 |
| Example 22 | 79.9 | 19.9 | 0.2 | 3.02 | 8.5 | 222.9 | 900 | 2.0 | -31.1 |
| Example 23 | 72.6 | 26.8 | 0.6 | 1.97 | 7.3 | 155.1 | 900 | 2.0 | -31.1 |
| Example 24 | 79.4 | 20.4 | 0.2 | 0.75 | 6.2 | 78.4 | 900 | 2.0 | -31.1 |
| Example 25 | 76.6 | 22.5 | 0.9 | 0.53 | 7.8 | 74.5 | 900 | 2.0 | -31.1 |
| Example 26 | 79.7 | 19.6 | 0.7 | 0.88 | 9.5 | 104.3 | 900 | 2.0 | -31.1 |
| Example 27 | 74.3 | 25.2 | 0.5 | 0.89 | 6.3 | 87.2 | 900 | 2.0 | -31.1 |
| Example 28 | 83.1 | 16.1 | 0.9 | 0.26 | 20.3 | 129.1 | 900 | 2.0 | -31.1 |
| Example 29 | 72.8 | 27.0 | 0.1 | 0.33 | 6.2 | 53.9 | 900 | 2.0 | -31.1 |
| Example 30 | 79.4 | 20.0 | 0.6 | 0.46 | 6.7 | 64.2 | 900 | 2.0 | -31.1 |
| Example 31 | 83.4 | 16.3 | 0.3 | 0.26 | 8.2 | 60.9 | 900 | 2.0 | -31.1 |
| Example 32 | 82.4 | 17.5 | 0.1 | 0.60 | 5.8 | 67.3 | 900 | 2.0 | -31.1 |
| Example 33 | 69.5 | 30.4 | 0.1 | 0.77 | 9.7 | 99.0 | 900 | 2.0 | -31.1 |
| Example 34 | 82.0 | 17.8 | 0.2 | 0.41 | 9.8 | 79.1 | 900 | 2.0 | -31.1 |
| Example 35 | 62.8 | 36.9 | 0.3 | 0.49 | 10.9 | 89.6 | 950 | 2.0 | -28.3 |
| Example 36 | 81.5 | 18.4 | 0.1 | 0.12 | 13.7 | 83.3 | 850 | 4.0 | -33.5 |
| Example 37 | 70.3 | 28.8 | 0.9 | 0.40 | 7.0 | 62.6 | 900 | 2.0 | -31.1 |
| Example 38 | 47.5 | 47.6 | 4.8 | 0.80 | 7.2 | 86.5 | 900 | 2.0 | -31.1 |
| Example 39 | 68.9 | 30.2 | 0.9 | 0.52 | 14.7 | 112.6 | 900 | 2.0 | -31.1 |
| Example 40 | 73.8 | 25.7 | 0.6 | 0.48 | 10.5 | 86.9 | 850 | 1.0 | -33.4 |
| Example 41 | 66.9 | 32.9 | 0.2 | 0.46 | 12.9 | 99.0 | 400 | 2.0 | -32.9 |
| Example 42 | 89.8 | 9.4 | 0.8 | 0.60 | 4.3 | 58.9 | 900 | 2.0 | -31.1 |
| Example 43 | 73.5 | 26.3 | 0.2 | 0.84 | 8.5 | 96.5 | 1050 | 2.0 | -21.3 |
| Example 44 | 70.7 | 29.1 | 0.2 | 0.74 | 7.2 | 83.2 | 900 | 0.1 | -31.1 |
| Example 45 | 74.7 | 25.3 | - | 0.68 | 8.0 | 84.1 | 900 | 2.0 | -31.1 |
| Example 46 | 78.8 | 21.2 | - | 0.71 | 7.6 | 84.0 | 900 | 2.0 | -31.1 |
| Example 47 | 72.1 | 27.9 | | 0.57 | 9.1 | 84.1 | 900 | 2.0 | -31.1 |
| Example 48 | 77.5 | 22.5 | - | 0.62 | 8.6 | 84.4 | 900 | 2.0 | -31.1 |
| Example 49 | 74.8 | 25.2 | - | 0.60 | 8.0 | 79.4 | 900 | 2.0 | -31.1 |
| Example 50 | 82.0 | 18.0 | - | 0.59 | 9.7 | 88.6 | 900 | 2.0 | -31.1 |
| Example 51 | 98.9 | 1.1 | - | 0.74 | 8.0 | 87.9 | 900 | 2.0 | -31.1 |
| Example 52 | 99.1 | 0.9 | - | 0.68 | 9.6 | 93.4 | 900 | 2.0 | -31.1 |
| Example 53 | 97.1 | 2.9 | - | 0.81 | 9.2 | 98.4 | 900 | 2.0 | -31.1 |
| Example 54 | 99.8 | 0.2 | - | 0.79 | 7.7 | 89.2 | 900 | 2.0 | -31.1 |
| Example 55 | 98.2 | 1.8 | - | 0.74 | 7.2 | 83.2 | 900 | 2.0 | -31.1 |
| Example 56 | 75.0 | 23.5 | 1.5 | 0.68 | 8.2 | 85.2 | 900 | 2.0 | -31.1 |
| Example 57 | 75.8 | 23.6 | 0.6 | 0.59 | 8.9 | 83.9 | 900 | 2.0 | -31.1 |
| Example 58 | 75.9 | 23.6 | 0.5 | 0.75 | 9.5 | 96.7 | 900 | 2.0 | -31.1 |
| Example 59 | 78.5 | 21.2 | 0.4 | 0.56 | 7.3 | 73.4 | 900 | 2.0 | -31.1 |
| Example 60 | 78.9 | 20.8 | 0.3 | 0.82 | 7.8 | 91.5 | 900 | 2.0 | -31.1 |
| Example 61 | 78.0 | 20.6 | 1.4 | 0.49 | 9.8 | 83.4 | 900 | 2.0 | -31.1 |
| Example 62 | 96.1 | 3.8 | 0.2 | 0.73 | 8.8 | 91.6 | 900 | 2.0 | -31.1 |
| Example 63 | 99.1 | 0.4 | 0.5 | 0.63 | 9.3 | 88.4 | 900 | 2.0 | -31.1 |
| Example 64 | 96.5 | 3.3 | 0.2 | 0.83 | 8.5 | 95.6 | 900 | 2.0 | -31.1 |
| Example 65 | 95.3 | 4.5 | 0.2 | 0.76 | 9.3 | 96.4 | 900 | 2.0 | -31.1 |
| Example 66 | 73.6 | 25.6 | 0.8 | 0.85 | 9.9 | 104.8 | 900 | 2.0 | -31.1 |
| Example 67 | 67.5 | 32.3 | 0.2 | 0.86 | 11.5 | 113.9 | 1200 | 2.0 | -7.3 |
| Example 68 | 79.8 | 19.8 | 0.5 | 0.35 | 10.7 | 79.9 | 1150 | 2.0 | -12.4 |
| Example 69 | 72.4 | 27.1 | 0.4 | 0.24 | 12.3 | 82.6 | 1500 | 2.0 | 33.7 |
| Example 70 | 62.6 | 37.1 | 0.3 | 0.53 | 10.1 | 87.3 | 500 | 2.0 | -36.3 |
| Example 71 | 76.5 | 21.4 | 2.1 | 0.54 | 6.2 | 66.2 | 1350 | 2.0 | 11.1 |
| Example 72 | 71.6 | 27.5 | 0.9 | 0.59 | 8.5 | 81.6 | 900 | 2.0 | -31.1 |
| Example 73 | 76.3 | 23.4 | 0.4 | 0.22 | 3.9 | 34.9 | 900 | 2.0 | -31.1 |
| Example 74 | 83.7 | 16.1 | 0.1 | 0.18 | 6.2 | 45.5 | 900 | 2.0 | -31.1 |
| Example 75 | 68.8 | 31.0 | 0.2 | 0.20 | 2.0 | 22.7 | 900 | 2.0 | -31.1 |
| Example 76 | 20.5 | 77.0 | 2.5 | 0.75 | 8.5 | 91.0 | 900 | 2.0 | -31.1 |
| Example 77 | 50.4 | 30.5 | 19.2 | 0.68 | 7.5 | 81.6 | 900 | 2.0 | -31.1 |
| Example 78 | 72.0 | 27.9 | 0.1 | 0.46 | 8.2 | 72.9 | 900 | 2.0 | -31.1 |
| Example 79 | 78.2 | 21.4 | 0.4 | 8.43 | 5.2 | 518.6 | 900 | 2.0 | -31.1 |
| Comparative Example 1 | 69.9 | 29.8 | 0.3 | 0.11 | 0.9 | 11.7 | 900 | 2.0 | -31.1 |
| Comparative Example 2 | 83.9 | 15.9 | 0.2 | 0.05 | 1.9 | 13.6 | 900 | 2.0 | -31.1 |

**[Table 3]**

| | Si-containing granulated body | | | | Evaluation | | | | |
|---|---|---|---|---|---|---|---|---|---|
| | Average secondary particle diameter (µm) | Aspect ratio | Carbon coating rate (mass%) | SiC content proportion (%) | Safety | Water resistance | Battery characteristics | | |
| | | | | | | | Initial Coulombic efficiency (%) | Active material utilization rate (%) | Cycle retention rate (%) |
| Example 1 | 5.5 | 1.0 | 63.6 | 0.6 | A | A | 88.2 | 0.96 | 87.4 |
| Example 2 | 10.4 | 1.0 | 89.5 | 0.7 | A | A | 86.4 | 0.83 | 86.8 |
| Example 3 | 8.9 | 1.0 | 98.2 | 0.7 | A | A | 87.5 | 0.86 | 94.0 |
| Example 4 | 10.6 | 1.0 | 74.1 | 0.8 | A | A | 90.5 | 0.91 | 87.8 |
| Example 5 | 8.4 | 1.0 | 58.8 | 0.7 | A | A | 84.9 | 0.91 | 83.3 |
| Example 6 | 11.9 | 1.0 | 94.7 | 0.8 | A | A | 86.4 | 0.92 | 91.4 |
| Example 7 | 12.8 | 1.0 | 50.2 | 0.8 | A | A | 83.7 | 0.89 | 81.2 |
| Example 8 | 8.2 | 1.0 | 44.0 | 0.7 | A | A | 86.2 | 0.82 | 95.7 |
| Example 9 | 10.5 | 1.0 | 68.5 | 0.8 | A | A | 88.5 | 0.95 | 96.7 |
| Example 10 | 10.0 | 1.0 | 58.2 | 5.7 | A | A | 87.0 | 0.82 | 94.8 |
| Example 11 | 9.5 | 1.0 | 39.6 | 12.1 | A | A | 89.5 | 0.83 | 95.6 |
| Example 12 | 14.1 | 1.0 | 83.4 | 0.2 | A | A | 87.2 | 0.80 | 86.6 |
| Example 13 | 8.7 | 1.0 | 95.6 | 0.4 | A | A | 85.6 | 0.90 | 84.2 |
| Example 14 | 10.3 | 1.0 | 56.0 | 0.2 | A | A | 88.1 | 0.81 | 95.4 |
| Example 15 | 5.2 | 1.0 | 37.8 | 0.5 | A | A | 85.4 | 0.85 | 91.6 |
| Example 16 | 7.8 | 1.0 | 48.4 | 0.3 | A | A | 85.8 | 0.83 | 91.5 |
| Example 17 | 8.9 | 1.0 | 33.1 | 0.7 | A | A | 82.1 | 0.97 | 92.7 |
| Example 18 | 13.7 | 1.0 | 99.0 | 0.8 | A | A | 81.2 | 0.97 | 90.6 |
| Example 19 | 12.1 | 1.0 | 97.6 | 0.8 | A | A | 82.4 | 0.95 | 95.3 |
| Example 20 | 4.5 | 1.0 | 46.7 | 0.8 | A | A | 82.0 | 0.87 | 94.5 |
| Example 21 | 6.9 | 1.0 | 98.7 | 0.7 | A | A | 84.6 | 0.85 | 83.0 |
| Example 22 | 13.8 | 1.0 | 90.6 | 0.7 | A | A | 88.7 | 0.88 | 78.0 |
| Example 23 | 11.8 | 1.0 | 97.4 | 0.7 | A | A | 85.4 | 0.87 | 84.0 |
| Example 24 | 9.5 | 1.8 | 56.5 | 0.9 | A | A | 84.2 | 0.90 | 97.0 |
| Example 25 | 12.4 | 1.5 | 53.7 | 0.8 | A | A | 86.1 | 0.89 | 96.5 |
| Example 26 | 14.8 | 1.1 | 91.9 | 1.1 | A | A | 81.7 | 0.91 | 92.0 |
| Example 27 | 6.6 | 1.0 | 83.9 | 0.7 | A | A | 84.6 | 0.84 | 86.4 |
| Example 28 | 3.6 | 1.0 | 96.3 | 0.9 | A | A | 88.9 | 0.81 | 91.5 |
| Example 29 | 10.8 | 1.0 | 34.5 | 0.7 | A | A | 86.5 | 0.90 | 94.2 |
| Example 30 | 6.6 | 1.0 | 41.2 | 0.8 | A | A | 82.3 | 0.83 | 89.6 |
| Example 31 | 7.1 | 1.0 | 53.7 | 0.8 | A | A | 87.1 | 0.97 | 90.2 |
| Example 32 | 6.6 | 1.0 | 59.3 | 0.7 | A | A | 88.0 | 0.90 | 83.9 |
| Example 33 | 18.2 | 1.0 | 63.5 | 0.9 | A | A | 90.4 | 0.89 | 90.0 |
| Example 34 | 2.7 | 1.0 | 69.7 | 0.7 | A | A | 80.7 | 0.83 | 93.3 |
| Example 35 | 10.3 | 1.0 | 71.8 | 3.6 | A | A | 86.5 | 0.85 | 92.3 |
| Example 36 | 13.8 | 1.0 | 73.5 | 0.9 | A | A | 88.8 | 0.84 | 85.5 |
| Example 37 | 14.8 | 1.0 | 55.2 | 0.7 | A | A | 82.1 | 0.82 | 94.6 |
| Example 38 | 13.1 | 1.0 | 83.2 | 0.8 | A | A | 84.1 | 0.83 | 81.1 |
| Example 39 | 7.8 | 1.0 | 99.3 | 0.8 | A | A | 86.1 | 0.93 | 85.8 |
| Example 40 | 7.9 | 1.0 | 83.6 | 0.5 | A | A | 87.1 | 0.90 | 91.8 |
| Example 41 | 16.6 | 1.0 | 63.5 | 0.1 | A | A | 80.5 | 0.91 | 93.2 |
| Example 42 | 11.2 | 1.0 | 51.9 | 0.7 | A | A | 82.4 | 0.92 | 84.3 |
| Example 43 | 17.9 | 1.0 | 92.8 | 8.5 | A | A | 81.0 | 0.83 | 93.0 |
| Example 44 | 6.7 | 1.0 | 60.0 | 0.8 | A | A | 90.4 | 0.96 | 80.8 |
| Example 45 | 8.8 | 1.0 | 74.1 | 0.7 | A | A | 88.5 | 0.89 | 79.0 |
| Example 46 | 8.9 | 1.0 | 60.6 | 0.8 | A | A | 87.2 | 0.91 | 79.0 |
| Example 47 | 7.5 | 1.0 | 67.4 | 0.7 | A | A | 83.4 | 0.88 | 84.0 |
| Example 48 | 10.2 | 1.0 | 67.7 | 0.8 | A | A | 89.3 | 0.92 | 81.0 |
| Example 49 | 9.9 | 1.0 | 57.3 | 0.8 | A | A | 83.6 | 0.94 | 88.0 |
| Example 50 | 8.5 | 1.0 | 78.1 | 0.8 | A | A | 85.5 | 0.96 | 79.0 |
| Example 51 | 9.9 | 1.0 | 63.4 | 0.8 | A | A | 82.3 | 0.89 | 87.8 |
| Example 52 | 6.7 | 1.0 | 82.4 | 0.7 | A | A | 88.7 | 0.92 | 88.8 |
| Example 53 | 13.1 | 1.0 | 63.1 | 0.7 | A | A | 85.4 | 0.94 | 89.8 |
| Example 54 | 12.7 | 1.0 | 78.6 | 0.9 | A | A | 88.3 | 0.84 | 90.8 |
| Example 55 | 8.8 | 1.0 | 73.4 | 0.8 | A | A | 87.5 | 0.90 | 91.8 |
| Example 56 | 9.9 | 1.0 | 61.4 | 1.3 | A | A | 87.4 | 0.86 | 84.0 |
| Example 57 | 9.5 | 1.0 | 60.5 | 1.1 | A | A | 89.2 | 0.96 | 82.0 |
| Example 58 | 8.4 | 1.0 | 69.8 | 0.6 | A | A | 88.4 | 0.84 | 89.0 |
| Example 59 | 11.5 | 1.0 | 52.9 | 0.7 | A | A | 86.3 | 0.82 | 84.8 |
| Example 60 | 13.2 | 1.0 | 66.0 | 1.5 | A | A | 88.7 | 0.82 | 91.0 |
| Example 61 | 8.7 | 1.0 | 60.1 | 1.1 | A | A | 87.3 | 0.90 | 86.8 |
| Example 62 | 12.2 | 1.0 | 44.0 | 0.8 | A | A | 84.6 | 0.87 | 91.0 |
| Example 63 | 9.6 | 1.0 | 56.7 | 0.5 | A | A | 88.2 | 0.89 | 93.0 |
| Example 64 | 8.9 | 1.0 | 68.9 | 0.5 | A | A | 81.4 | 0.90 | 94.0 |
| Example 65 | 10.5 | 1.0 | 85.0 | 1.2 | A | A | 85.7 | 0.88 | 92.0 |
| Example 66 | 9.9 | 1.0 | 95.8 | 0.8 | A | A | 87.5 | 0.86 | 87.0 |
| Example 67 | 4.3 | 1.0 | 82.2 | 24.5 | A | A | 78.0 | 0.72 | 85.4 |
| Example 68 | 7.8 | 1.0 | 76.9 | 15.3 | A | A | 83.7 | 0.70 | 85.4 |
| Example 69 | 14.2 | 1.0 | 59.6 | 53.1 | A | A | 89.4 | 0.48 | 89.6 |
| Example 70 | 12.9 | 1.0 | 84.0 | 0.2 | A | A | 69.1 | 0.87 | 81.0 |
| Example 71 | 10.4 | 1.0 | 53.1 | 36.5 | A | A | 84.7 | 0.64 | 82.0 |
| Example 72 | 8.7 | 2.5 | 71.9 | 0.8 | A | A | 82.5 | 0.91 | 70.6 |
| Example 73 | 13.4 | 1.0 | 19.6 | 0.7 | A | A | 78.5 | 0.93 | 64.0 |
| Example 74 | 8.2 | 1.0 | 28.6 | 0.7 | A | A | 82.6 | 0.86 | 67.2 |
| Example 75 | 5.5 | 1.0 | 14.5 | 0.7 | A | A | 90.3 | 0.90 | 58.0 |
| Example 76 | 14.9 | 1.0 | 72.9 | 0.8 | A | A | 68.1 | 0.88 | 81.6 |
| Example 77 | 12.4 | 1.0 | 78.5 | 0.7 | A | A | 85.3 | 0.79 | 72.0 |
| Example 78 | 25.3 | 1.0 | 64.3 | 0.7 | A | A | 82.5 | 0.83 | 51.0 |
| Example 79 | 8.3 | 1.0 | 97.5 | 0.9 | A | A | 84.7 | 0.84 | 65.0 |
| Comparative Example 1 | 14.2 | 1.0 | 7.5 | 0.8 | B | B | 87.9 | 0.96 | 48.0 |
| Comparative Example 2 | 4.9 | 1.0 | 12.0 | 0.7 | B | B | 83.3 | 0.84 | 38.0 |

Among the above results, comparison with the results of Comparative Examples 1 and 2 in particular shows that the negative electrode material powder for a lithium-ion battery according to the present embodiment is less likely to ignite, and has high safety and good water resistance. This is considered to be because the Si-based powder, which is primary particles, has a certain size or more, and the surface thereof is suitably coated with the carbon material, so that the contact between the electrolytic solution or oxygen and the Si phase, the SiX compound phase, and other phases such as the SnCu compound phase (optionally or the AlCu compound phase (optionally) constituting the Si-based powder is prevented with a high probability.

In addition to the above, the results of Examples 73 to 75 show that when the value of the carbon coating parameter A is more than 48, among the battery characteristics, particularly the cycle characteristics are improved.

In addition, the results of Examples 78 and 79 show that when the upper limit of the average primary particle diameter of the Si-based powder or the average secondary particle diameter of the Si-containing granulated body is set to a certain value or less, the cycle characteristics are also improved. The results of Example 72 show that the aspect ratio of the Si-containing granulated body also contributes to the cycle characteristics. The results of Example 77 show that the increase in amount of the SnCu phase in the Si-based powder contributes to the cycle characteristics.

Further, the results of Examples 67 to 69 and Example 71 show that when the heat treatment temperature is high and the value of the heat treatment parameter C is -15 or more, the content proportion of SiC contained in the Si-containing granulated body increases, and the active material utilization rate among the battery characteristics decreases. On the other hand, the results of Example 70 show that when the heat treatment temperature is too low, sufficient carbonization does not proceed and the initial Coulombic efficiency decreases. In this way, the content proportion of SiC can be controlled by performing a suitable heat treatment.

In addition to the above, the results of Example 76 show that when the proportion of the Si phase in the Si-based powder is small, the initial Coulombic efficiency decreases.

Although the negative electrode material powder for a lithium-ion battery according to the present embodiment has been described in detail above, the present invention is not limited to the above embodiment and Examples, and various modifications can be made without departing from the scope thereof.

Although the present invention has been described in detail and with reference to specific embodiments, it will be apparent to those skilled in the art that various changes and modifications can be made therein without departing from the spirit and scope of the present invention. The present application is based on Japanese patent application No. 2023-219678 filed on December 26, 2023, and the contents thereof are incorporated herein as reference.

## Claims

1. A negative electrode material powder for a lithium-ion battery, the negative electrode material powder comprising:
a Si-containing granulated body, wherein
the Si-containing granulated body contains a Si-based powder and a carbon material,
the Si-based powder is primary particles containing a Si phase and a SiX compound phase,
the SiX compound phase contains Si and an element X,
the element X is at least one selected from the group consisting of Fe, Co, Cr, Mn, Ni, Zr, Ti, B, and P,
the Si-based powder has an average primary particle diameter of 0.1 µm or more,
the Si-containing granulated body has an average secondary particle diameter of 2 µm or more,
the Si-based powder has a surface coated with the carbon material, and the Si-based powders are bonded to each other with the carbon material, and
the Si-based powder has a carbon coating parameter A represented by the following formula of more than 15,
Carbon coating parameter A = 58.1 × average primary particle diameter (µm) + 5.6 × carbon amount (mass%).

2. The negative electrode material powder for a lithium-ion battery according to claim 1, wherein the Si-containing granulated body has a content proportion of SiC of less than 15%.

3. The negative electrode material powder for a lithium-ion battery according to claim 1 or 2, wherein the carbon coating parameter A is more than 48.

4. The negative electrode material powder for a lithium-ion battery according to claim 1 or 2, wherein the average primary particle diameter of the Si-based powder is 5.0 µm or less.

5. The negative electrode material powder for a lithium-ion battery according to claim 1 or 2, wherein the average secondary particle diameter of the Si-containing granulated body is 20 µm or less.

6. The negative electrode material powder for a lithium-ion battery according to claim 1 or 2, wherein the Si-containing granulated body has an aspect ratio of 1.0 to 1.8.

7. The negative electrode material powder for a lithium-ion battery according to claim 1 or 2, wherein
the Si-based powder is primary particles further containing at least one selected from the group consisting of a SnCu compound phase and an AlCu compound phase,
the SnCu compound phase contains Sn and Cu,
the AlCu compound phase contains Al and Cu, and
the Si-based powder has a content proportion of the Si phase of 30 mass% or more.

8. The negative electrode material powder for a lithium-ion battery according to claim 7, wherein the Si-based powder has a total content proportion of the SnCu compound phase and the AlCu compound phase of 0.1 mass% to 15 mass%.
